# EUROPEAN PATENT SPECIFICATION

(11) **EP 1 971 894 B1**
(45) Date of publication and mention of the grant of the patent: **26.08.2015**
(21) Application number: 07717926.5
(22) Date of filing: 08.01.2007
(51) Int. Cl.: G02C 5/14, G06F 1/16, H04B 1/38, H04M 1/05, H04R 1/10, A41D 1/00

(54) **BIOLOGICALLY FIT WEARABLE ELECTRONICS APPARATUS AND METHODS**
BIOLOGISCH GEEIGNETES TRAGBARES ELEKTRONIKGERÄT UND VERFAHREN
APPAREIL ELECTRONIQUE PORTABLE BIOLOGIQUEMENT ADAPTE ET PROCEDES

(30) Priority: 06.01.2006 US 756549 P; 30.01.2006 US 762861 P; 13.12.2006 US 637952; 08.01.2007 US 650590
(43) Date of publication of application: 24.09.2008
(73) Proprietor: Abreu, Marcio Marc, North Haven, CT 06473 (US)
(72) Inventor: Abreu, Marcio Marc, North Haven, CT 06473 (US)
(74) Representative: Pfenning, Meinig & Partner GbR
(86) International application number: PCT/US2007/000177
(87) International publication number: WO 2007/081745

(56) References cited:
- WO-A1-2005/115048
- WO-A1-2007/046892
- JP-A- 2002 238 092
- US-A- 5 034 995
- US-A1- 2004 067 786
- US-A1- 2004 204 165
- US-A1- 2005 248 717
- US-A1- 2005 255 898

## Description

### Field of the Invention

The present invention relates to the field of biologically fit wearable electronics.

### Background of the Invention

In recent years, the use of cellular phones, music players, video players, video games, computers, and a variety of hand-held electronic products has greatly increased. Because they are hand-held, some of those electronic devices as computers are often carried by the user in a separate case. There have been attempts to create wearable electronics such as music players integrated into the frames of eyewear, eyewear radio devices as well as wearable computers. However, due to a disconnection between electronic products and the biological aspects of the human body, prior art devices have failed to provide a useful wearable electronic apparatus that adequately interact with the human body and which fit anatomically and physiologically with the body while allowing full interaction of senses including vision.

Accordingly, it would be desirable to provide electronic devices and electronic functions which are hands-free and can be worn on the surface of the body in a biologically fit manner. The present invention provides a convergence between electronic products and the biological and anatomical aspects of the human body and biomechanics of the body while providing a series of hands-free and interchangeable wearable electronic apparatus that can interact with human senses and physiology of the body in a practical manner.

The prior art also discloses "wearable" computers. Typically, however, these devices are complicated and not practical to use. Moreover, because they are not adapted to fit well onto a human body, their weight is not well distributed, and will normally cause discomfort to the wearer, discouraging long term use of the devices.

Wearable articles of clothing (including hats) with permanent electronics embedded on them are financially unattractive, because discarding the wearable article would also require throwing away the embedded electronics device.

Another problem with electronic devices such as computers, DVD players, cellular telephones, digital music players, and electronic organizers, is that in order to be operated they require the user to hold the device or place the device on an object (such as a piece of furniture or the floor) for support. It would be very useful to have an electronic device which does not require being held or placed on an object for support.

In addition, "hand-held" devices require that they be held. While some cellular phones and digital music/video players have accessories that permit the user to use the device without having to hold it, using such apparatus and accessories is cumbersome, and it is necessary to carry and store the accessories until they are actually used. Furthermore, it is easy to forget to bring the accessory, such as the ear bud or a strap to secure a digital player to the body, when needed.

Moreover, hand-held devices are easily lost or misplaced, and unattended hand-held devices can be easily stolen. It is common for people to forget their hand-held devices in restaurants, airplanes, taxi cabs, etc. It would be very useful to have a non-hand held and hands-free device that can be worn in a comfortable, non-obtrusive, and biologically-fit manner without requiring the user to carry extra devices or accessories in addition to the equipment already being worn on the body.

Document WO 2005/115048 A1 discloses a portable electronic device with a cord winding device. Document US 5,034,995 discloses a head supported portable radio, assembly.

### Summary of the Invention

The present invention teaches a convergence between electronic products and the biological and anatomical aspects of the human body and biomechanics of the body while providing a series of hands-free wearable electronic apparatus than can interact with human senses and are biologically fit and provide a weight distribution that does not activate pain fibers (and cause pain).

A variety of wearable electronic devices are provided in the present invention including computing devices, video players, music players, and the like.

It is an object of the invention to provide a plurality of hands-free wearable electronic devices including a video player, a music player, a video game, an electronic book, a global positioning system, a photo camera, a video camera, a television, a cordless phone, a cellular phone, and the like.

It is another object of the invention to provide hands-free support structure for housing electronics.

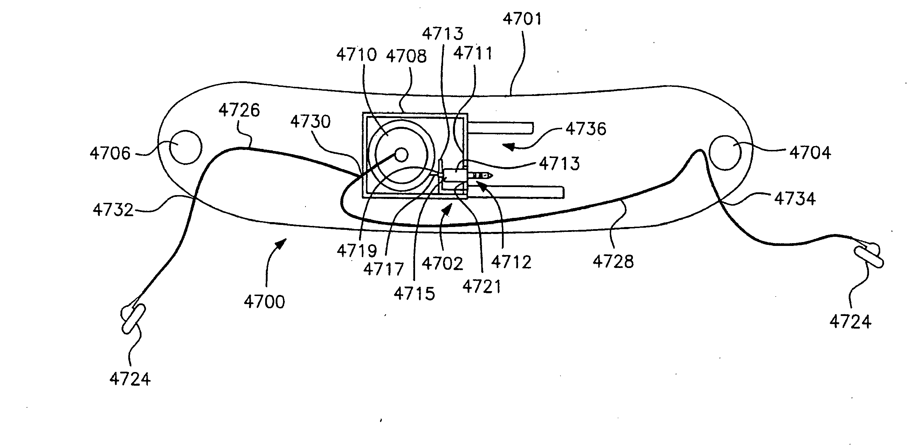

These and other objects of the invention, as well as many of the intended advantages thereof, will become more readily apparent when reference is made to the following description taken in conjunction with the accompanying drawing.

This drawing illustrates the main embodiment of the present invention including a support structure for a specialized storage frame.

Claim defines the main embodiment. Claims 2-4 concern additional embodiments.

### Detailed Description of Main Embodiment

The support structure shown in the drawing is preferably a cord, referred to herein as storage cord 4700. The storage cord 4700 has in its geometric center 4701 a specialized storage frame 4702. The storage cord 4700 has an essentially rectangular or oblong shape, and has anchoring means in the right and left areas adjacent to its edges, such as buttons, sleeves, Velcro strips, and the like. In the drawing there is one right button 4704 and one left button 4706.

The specialized storage frame 4702 includes a box-like structure 4708 having a retractable cord spool 4710. The box-like structure 4708 has an inside wall 4711 to support the end 4713 of a stereo plug 4712, and another interior wall 4713 to support the end 4715 of the stereo plug connected to a wire 4717.

Commonly used stereo plugs have two portions, a metal portion (free end) and a non-metal end portion, usually a rubberized portion, which is affixed to a wire from the metallic portion. The wall 4713 inside the box 4708 has an opening 4719, preferably a slit for receiving the wire 4717 of the stereo plug 4712 or the end of the stereo plug. The wall 4711 of the box-like structure 4708 located perpendicular to a longitudinal axis of the stereo plug 4712 has an opening 4721 for firmly holding the stereo plug 4712 in place.

The configuration of the specialized housing allows the stereo plug to remain in a stable and firm position for consistently receiving the jack or a female connector of an electronic device. Without the configuration of the invention the stereo plug 4712 would be pulled toward the retractable cord 4710 and the free end of the plug 4712 would face in different random directions, thus not allowing consistent alignment for attaching and detaching an electronic device to the stereo plug 4712. It is understood that the retractable cord can be connected to a female connector for receiving a male connector of a removably mounted device. It is further understood that the connecting and alignment assembly of the invention can be used for electrical connection as well as mechanical connection.

Preferably the stereo plug 4712 is held between two spaced arms. The invention teaches connecting a stereo plug to a retractable wire leaving the free end (that includes the metal portion) of the stereo plug exposed and free to consistently receive a stereo jack (or any audio jack) in alignment with an electronic device. The stereo plug can be extended by human pulling force on the stereo plug and then the stereo plug is retracted to its rest position by the tension of the spring in the retractable cord spool 4710.

Thus, the present invention teaches a method and device for connecting a stereo plug to a retractable cord, and for consistently aligning with and receiving and connecting the end of the stereo plug to a female connector. Without the specialized housing supporting opposite ends of the plug 4712, which includes a wall 4713 inside the box 4708 having a limited size opening 4719, the stereo plug 4712 would be pulled into the spool 4710.

It is understood, that although it is much more preferable to have the wall 4713 inside the box 4708, the invention can function without the inside wall. However, in this alternative embodiment the end of the stereo plug rests against the spool and the opening 4721 in the wall 4711 of the box 4708 would be positioned at a mid-portion of the non-metallic portion of the stereo plug 4712.

The specialized structure of the storage cord 4700 further includes connecting the end of the wire that is connected to ear buds 4724 (or any device delivering sound). The wire of the ear buds exits from the center of the spool 4710. The wire preferably has a fixation point, preferably soldered to a top of the spool. The specialized wires of the invention include the ear bud wire 4726 to one ear bud 4724 having a different length as compared to the ear bud wire 4728 to the opposite ear bud 4724. This length is measured from the exit point 4730 of the spool 4710 or exit point of the box 4708.

As seen in the drawing, the wire 4728 of the right ear bud is longer than the wire 4726 of the left ear bud. the length of the ear bud wires are similar or are equal from the exit points 4732, 4734 of the storage cord 4700. This specialized configuration of dissimilar length wires allow the best anatomic positioning of the spool next to the electronic device along the longitudinal axis of the storage cord while allowing the visible part of the wires to have the same length. The areas of the wire passing internally along the storage cord are preferably sandwiched between two layers of material, making the dissimilar configuration of the ear bud wires not visible to an external observer.

'The longitudinal axis of the stereo plug 4712 is preferably positioned parallel to the longitudinal axis of the storage cord 4700, and preferably pointing towards at least one anchoring means, illustrate herein as the right button 4704. The metallic portion of the stereo plug is visible and located in a second area 4736 of the housing 4702, which is adapted to receive and store an article, preferably an electronics package, as previously described for the present invention. Preferably the empty area 4736 of the housing 4702 includes a slide ramp structure. Although the electronic device can be removed by using a vertical pulling, the preferred method includes a horizontal pulling. Many variations will be apparent to one of ordinary skill in the art. Exemplarily, the storage frame can include an inverted V with a large angle configuration, in which one arm of the V has the spool and the other arm of the V has a housing for receiving an electronic device. In this embodiment, the electronic device is pointing diagonally at about a 45 degree angle in relation to the ground.

When pulled the electronic device moves in a diagonal fashion which is a more biologically fit movement of the arm when grabbing a device in the back of the head. In this embodiment the wire of the stereo plug may be partially folded at a 45 degree angle, and the two wall structures securing the stereo plug may be part of the housing in the arm of the V receiving the electronic device. The opposite arm has the housing for the spool. A wheel (such as a pulley mechanism) between the two arms of the V may be used to facilitate a motion at an angled position.

For a device having a jack of an electronics device located perpendicular to the stereo plug 4712, an alternative embodiment would include an L-shape stereo plug. In this embodiment the housing receiving the electronic device may include a structure connecting the upper edge of the ramp with a lower edge of the ramp, thus creating a slit in which a wire can pass during removal of the device from the slide ramp structure.

The preferred diameter for the spool is equal to or less than 12 cm, and preferably equal to or less than 7 cm, and most preferably equal to or less than 4 cm, and even most preferably equal to or less than 2 cm. The preferred length of the structure housing the spool and the non-metallic portion of the stereo plug is equal to or less than 90 mm, and preferably equal to or less than 70 mm, and most preferably equal to or less than 52 mm, and even most preferably equal t or less than 42 mm.

## Claims

1. Device configured to electrically connect a stereo plug (4712) to a retractable wire (4717) and to a removably stored electronic device comprising a stereo plug (4712), a support structure (4700) with a housing (4702) including a box-like structure (4708) having a spool (4710) with the retractable wire (4717),
the box-like structure (4708) having two inside walls (4711, 4713) including an opening (4719, 4721) configured to hold the stereo plug (4712) in place,
wherein the free end of the stereo plug (4712) is exposed to receive an audio jack of the electronic device removably stored in an area (4736) of the housing (4702), and the other end of the stereo plug (4712) is connected to one end of the retractable wire (4717),
the device further comprising specialized wires and sound delivery devices
wherein the other end of the retractable wire (4717) is connected to the specialized wires (4726, 4728) that exit from the center of the spool (4710) and each are connected to one of the sound delivery devices (4724),
wherein one (4711) of the two inside walls (4711, 4713) is configured to hold the free end of the stereo plug (4712) such that the stereo plug (4712) can be extended by a pulling force and can be retracted to its rest position by a spring in the spool (4710), and the other (4713) having a limited size opening (4719) configured to hold the other end of the stereo plug (4712) and/or the retractable wire (4717) against being pulled into the spool (4710).

2. Device according to claim 1, wherein the sound delivery devices are ear buds (4724).

3. Device according to claim 2, wherein the specialized wires (4726, 4728) have equal lengths within the box-like structure (4708) and different lengths outside the box-like structure (4708).

4. Device according to one of claims 1 to 3, wherein the housing (4702) includes two arms forming an inverted V with a large angle configuration, in which one arm has the spool (4710) and the other arm has a casing for receiving the electronic device.

## Patentansprüche

1. Vorrichtung, die konfiguriert ist zum elektrischen Verbinden eines Stereosteckers (4712) mit einem zurückziehbaren Draht (4717) und mit einer bewegbar untergebrachten elektronischen Vorrichtung, aufweisend einen Stereostecker (4712), eine Stützstruktur (4700) mit einem Gehäuse (4702) enthaltend eine kastenartige Struktur (4708) mit einer Spule (4710) mit dem zurückziehbaren Draht (4717),
welche kastenartige Struktur (4708) zwei Innenwände (4711, 4713) hat, die eine Öffnung (4719, 4721), die zum Halten des Stereosteckers (4712) in seiner Lage konfiguriert ist, enthalten,
wobei das frei Ende des Stereosteckers (4712) freiliegt, um eine Audiobuchse der entfernbar in einem Bereich (4736) des Gehäuses (4702) untergebrachten elektronischen Vorrichtung aufzunehmen, und das andere Ende des Stereosteckers (4712) mit einem Ende des zurückziehbaren Drahts (4717) verbunden ist,
welche Vorrichtung weiterhin spezialisierte Drähte und Tonlieferungsvorrichtungen aufweist,
wobei das andere Ende des zurückziehbaren Drahts (4717) mit den spezialisierten Drähten (4726, 4728), die aus der Mitte der Spule (4710) austreten und jeweils mit einer der Tonlieferungsvorrichtungen (4724) verbunden sind, verbunden ist,
wobei eine (4711) der beiden Innenwände (4711, 4713) konfiguriert ist, das freie Ende des Stereosteckers (4712) so zu halten, dass der Stereostecker (4712) durch eine Zugkraft verlängert werden kann und durch eine Feder in der Spule (4710) in seine Ruheposition zurückgezogen werden kann, und die andere (4713) eine Öffnung (4719) begrenzter Größe hat, die zum Halten des anderen Endes des Stereosteckers (4712) und/oder des zurückziehbaren Drahts (4717) gegen das Zurückziehen in die Spule (4710) konfiguriert ist.

2. Vorrichtung nach Anspruch 1, bei der die Tonlieferungsvorrichtungen Ohrstöpsel (4724) sind.

3. Vorrichtung nach Anspruch 2, bei der die spezialisierten Drähte (4726, 4728) innerhalb der kastenartigen Struktur (4708) gleiche Längen haben und außerhalb der kastenartigen Struktur (4708) unterschiedliche Längen haben.

4. Vorrichtung nach einem der Ansprüche 1 bis 3, bei der das Gehäuse (4702) zwei Arme enthält, die die Konfiguration eines umgekehrten V mit einem großen Winkel bilden, wobei der eine Arm die Spule (4710) hat und der andere Arm ein Gehäuse zum Aufnehmen der elektronischen Vorrichtung hat.

## Revendications

1. Dispositif configuré pour connecter électriquement une prise stéréo (4712) à un câble rétractable (4717) et à un dispositif électronique stocké de façon amovible, comprenant une prise stéréo (4712), une structure de support (4700) munie d'un boîtier (4702) incluant une structure en forme de boîte (4708) comportant un tambour d'enroulement (4710) muni du câble rétractable (4717),
la structure en forme de boîte (4708) comportant deux parois internes (4711, 4713) incluant une ouverture (4719, 4721) configurée pour maintenir la prise stéréo (4712) en place,
dans lequel l'extrémité libre de la prise stéréo (4712) est exposée de manière à recevoir un jack audio du dispositif électronique stocké de façon amovible dans une zone (4736) du boîtier (4702) et l'autre extrémité de la prise stéréo (4712) est connectée à une extrémité du câble rétractable (4717), le dispositif comprenant en outre des câbles spécialisés et des dispositifs de délivrance de son,
dans lequel l'autre extrémité du câble rétractable (4717) est connectée aux câbles spécialisés (4726, 4728) qui sortent depuis le centre du tambour d'enroulement (4710) et dont chacun est connecté à l'un des dispositifs de délivrance de son (4724),
dans lequel l'une (4711) des deux parois internes (4711, 4713) est configurée de manière à maintenir l'extrémité libre de la prise stéréo (4712) de telle sorte que la prise stéréo (4712) puisse être étendue par une force de traction et puisse être rétractée jusqu'à sa position de repos par un ressort dans le tambour d'enroulement (4710) et l'autre (4713) comporte une ouverture de dimension limitée (4719) configurée de manière à maintenir l'autre extrémité de la prise stéréo (4712). et/ou le câble rétractable (4717) contre une rétraction vers le tambour d'enroulement (4710).

2. Dispositif selon la revendication 1, dans lequel les dispositifs de délivrance de son sont des écouteurs (4724).

3. Dispositif selon la revendication 2, dans lequel les câbles spécialisés (4726, 4728) présentent des longueurs égales à l'intérieur de la structure en forme de boîte (4708) et des longueurs différentes à l'extérieur de la structure en forme de boîte (4708).

4. Dispositif selon l'une des revendications 1 à 3, dans lequel le boîtier (4703) inclut deux bras formant un V inversé selon une configuration à grand angle, où un bras comporte le tambour d'enroulement (4710) et l'autre bras comporte un carter pour recevoir le dispositif électronique.
